# EUROPEAN PATENT APPLICATION

(11) **EP 4 672 735 A1**
(43) Date of publication of application: **31.12.2025**
(21) Application number: 25185608.4
(22) Date of filing: 26.06.2025
(51) Int. Cl.: H04N 7/18

(54) **TECHNIQUES FOR PREEMPTIVE SUPPLEMENTAL VIDEO RECORDING**

(30) Priority: 27.06.2024 US 202463665191 P; 24.06.2025 US 202519248064
(71) Applicant: Tyco Fire & Security GmbH, 8212 Neuhausen am Rheinfall (CH)
(72) Inventor: FEE, Paul, Belfast (GB); MCCAMBRIDGE, John, Bangor (GB); DENNIS, Kevin, Newtownards (GB)
(74) Representative: Meissner Bolte Nürnberg

(57) **Abstract**

Systems and methods are disclosed for preparing encoded video streams at a video recorder. One or more encoding parameter values for capturing the video using the camera can be selected, based at least in part on one or more of a usage pattern of requesting video from a camera or a detected content of a video from the camera or an access control event in an area associated with the camera. The camera can be configured to provide a video stream using the one or more encoding parameter values, and the video stream encoded based on the one or more encoding parameter values can be received from the camera.

## Description

### Claim of Priority under 35 U.S.C. §119

The present Application for Patent claims priority to U.S. Non-Provisional Patent Application No.19/248,064, entitled "TECHNIQUES FOR PREEMPTIVE SUPPLEMENTAL VIDEO RECORDING", filed June 24, 2025, and Provisional Patent Application No. 63/665,191, entitled "TECHNIQUES FOR PREEMPTIVE SUPPLEMENTAL VIDEO RECORDING" filed June 27, 2024, which is assigned to the assignee hereof and hereby expressly incorporated by reference herein for all purposes.

The present disclosure relates to cameras deployed within an area, and more particularly to capturing video from the cameras using a video recorder that can provide the captured video for playback. The invention relates in particular to a video recorder and to a computer-implemented method for preparing encoded video streams at a video recorder.

Many areas, such as areas within a building, have cameras deployed for various purposes, such as providing video data for playback to one or more devices in an enterprise network. This can allow security personnel to surveil an area using a computer or other device connected to the enterprise network to receive the video data. In other examples, the video data can be used by automated systems to identify people occupying the area, provide access to an area based on identifying people, detect activities or incidents occurring in the area, trigger security notifications based on the activities or incidents, etc. Each camera is connected to the enterprise network and can be coupled to a video recorder that communicates with the cameras to capture and/or store video streams from the cameras.

Devices operating in the enterprise network can communicate with the video recorder to access and/or otherwise playback videos captured by the cameras. The video recorder can offer both live and recorded playback of video content. The devices can request the video stream from the video recorder based on selectable video encoding parameters, such as a megapixel parameter, a frames-per-second (FPS) parameter, etc. The video recorder can receive a high quality video stream from the camera (e.g., the highest quality supported by the camera) and can accordingly transcode the video stream received from the camera to the requested video stream encoding for providing to the devices. In this regard, for example, the devices can balance video quality with latency associated with transcoding or sending the video to the device.

Embodiments and aspects according to the invention are, in particular, disclosed or defined in the appended claims.

This summary is provided to introduce a selection of concepts that are further described below in the DETAILED DESCRIPTION. This summary is not intended to identify key features of the claimed subject matter, nor is it intended to be used as an aid in determining the scope of the claimed subject matter.

In an aspect, a video recorder is provided that includes one or more processors, one or more memories coupled with the one or more processors, and instructions stored in the one or more memories. The instructions are operable, when executed by the one or more processors, to cause the video recorder to select, based at least in part on one or more of a usage pattern of requesting video from a camera or a detected content of a video from the camera or an access control event in an area associated with the camera, one or more encoding parameter values for capturing the video using the camera, configure the camera to provide a video stream using the one or more encoding parameter values, receive, from the camera, the video stream encoded based on the one or more encoding parameter values, and provide, to a viewing device and based on a current request from the viewing device, the video stream.

In another aspect, a method for preparing encoded video streams at a video recorder is provided. The method includes selecting, based at least in part on one or more of a usage pattern of requesting video from a camera or a detected content of a video from the camera or an access control event in an area associated with the camera, one or more encoding parameter values for capturing the video using the camera, configuring the camera to provide a video stream using the one or more encoding parameter values, receiving, from the camera, the video stream encoded based on the one or more encoding parameter values, and providing, to a viewing device and based on a current request from the viewing device, the video stream.

In another aspect, a computer-readable medium storing instructions thereon that, when executed by at least one computing device, cause the at least one computing device to perform operations for preparing encoded video streams at a video recorder is provided. The operations include selecting, based at least in part on one or more of a usage pattern of requesting video from a camera or a detected content of a video from the camera or an access control event in an area associated with the camera, one or more encoding parameter values for capturing the video using the camera, configuring the camera to provide a video stream using the one or more encoding parameter values, receiving, from the camera, the video stream encoded based on the one or more encoding parameter values, and providing, to a viewing device and based on a current request from the viewing device, the video stream.

In another aspect, cameras, devices, or systems are provided that includes various hardware, software, or other components for preparing encoded video streams at a video recorder using one or more methods described herein. In another aspect, a computer-readable medium is provided herein that stores computer executable instructions for preparing encoded video streams at a video recorder using one or more methods described herein.

Further aspects of the present disclosure are described below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates an example of a system that includes a video recorder for communicating with various nodes to receive video data from one or more cameras, in accordance with aspects described herein;
FIG. 2 illustrates an example of a system including a video recorder for configuring cameras over an enterprise network, or a different interface, in accordance with aspects described herein;
FIG. 3 is a flowchart of an example of a method for configuring cameras to provide video streams with certain encoding parameter values, in accordance with aspects described herein.
FIG. 4 is a diagram of an example of a call flow between devices in a system including a video recorder, in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Cameras are often deployed in certain areas, such as areas within a building, for various purposes, such as video surveillance, subject identification/authentication, activity detections, etc. The cameras can communicate with a video recorder and/or other nodes of a video management system to provide captured video thereto for further processing. For example, the video recorder can include a network video recorder that can be coupled to the enterprise network (e.g., via a wired or wireless network connection, such as a local area network (LAN) connection, wireless LAN (WLAN) connection, etc.) as a video recorder and can receive video from the cameras via the enterprise network. In this example, the cameras may also be coupled to the enterprise network (e.g., via a wired or wireless network connection) for communicating with the network video recorder to provide video data, such as a video stream, thereto. Other interfaces between the camera and video recorder are possible to allow the cameras to provide the video data to the video recorder.

One or more cameras can capture video for providing to the video recorder, where the capturing or associated encoding can be based on one or more encoding parameters. The one or more encoding parameters may include a specification or indication of video resolution (e.g., a number of megapixels), a number of frames-per-second (fps) to record, etc. In an example, the video recorder can be configured to provide an indication of one or more encoding parameter values to the one or more cameras to specify an encoding for video data to be provided by the one or more cameras to the video recorder. The video recorder can obtain video captured by the one or more cameras in a high-quality video stream (e.g., a highest quality supported by the one or more cameras) and can transcode the video stream to a lower quality if requested by a playback device. This transcoding, however, can be resource intensive.

In accordance with aspects described herein, the video recorder can determine or specify (e.g., to the one or more cameras) the encoding parameters based on one or more considerations related to one or more of usage patterns (e.g., by a playback device) in requesting video from the one or more cameras, content within the video, a detected event on an associated access control device, etc. In this regard, for example, the video recorder can obtain and/or store one or more video streams from the camera in an encoding that is predicted to be requested by a playback device, so that transcoding by the video recorded may not be needed. In some examples, the video recorder can request, from the camera, and/or store, multiple video streams (e.g., multiple recordings) of a same video each having a different encoding (e.g., different resolution, fps, etc.). In some examples, the stored video streams can be predicted to be requested by the playback device. Thus, in an example, the video recorder can store multiple native video streams from the camera that are recorded and/or encoded at different native formats (e.g., different resolution, fps, etc.) in an attempt to avoid transcoding the video for playback by certain devices. Avoiding transcoding, in this regard, can conserve resources on the video recorder. This may enable the resources to be used for other purposes on the video recorder, which can improve device experience in communicating with the video recorder, etc.

Turning now to the figures, example aspects are depicted with reference to one or more modules or components described herein, where modules or components in dashed lines may be optional.

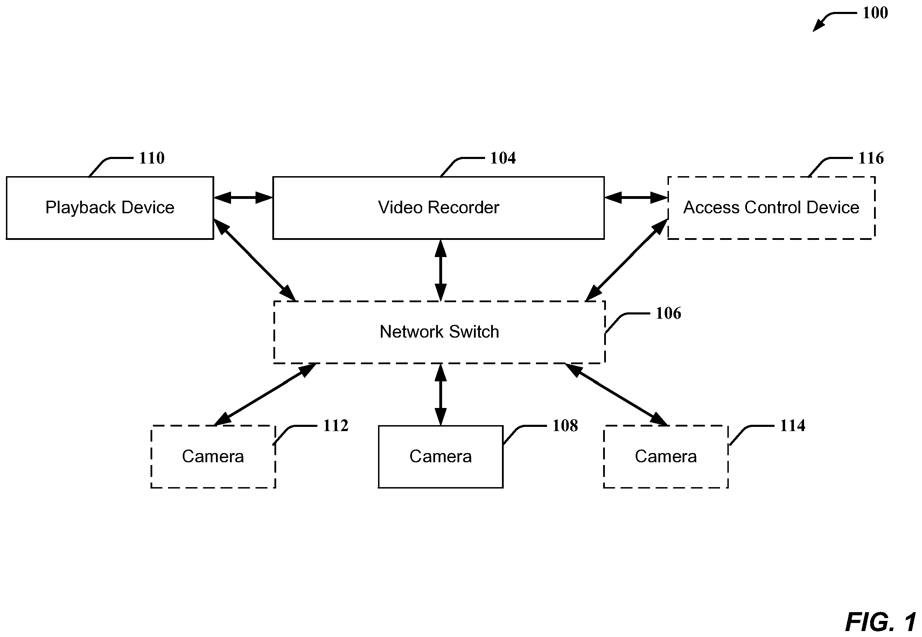

Referring to FIG. 1, an example of a system 100 is shown that includes a video recorder 104 for communicating with various nodes to receive video data from one or more cameras 108, 112, or 114, in accordance with aspects described herein. For example, the video recorder 104 can be, or can include, a network video recorder (NVR) that can receive video data, audio data, metadata, etc. from one or more cameras 108, 112, and/or 114, e.g., via a network switch 106 or otherwise. The multiple cameras 108, 112, and/or 114 can be red, green, blue (RGB) cameras, infrared cameras, depth cameras, etc. In this regard, for example, the multiple cameras 108, 112, and/or 114 can be network enabled such that they are configured to communicate with network hardware, such as the network switch 106, via a network interface card that is communicatively coupled to the network switch 106 by a wired or wireless connection. The multiple cameras 108, 112, and/or 114 can each capture video data, audio data, and/or associated metadata that the multiple cameras 108, 112, and/or 114 can each provide upstream to the video recorder 104 (e.g., via the network switch 106 or other interface between the video recorder 104 and the camera(s) 108, 112, and/or 114).

System 100 can also include a playback device 110 that can access, from the video recorder 104 (e.g., via network switch 106 or other interface) video streams as captured by the cameras 108, 112, and/or 114, for playback on the playback device 110. For example, the playback device 110 can be a computer, a mobile device, such as a smartphone, tablet, etc., a television, or substantially any device that can receive and playback video streams from a video recorder 104. In this regard, for example, the playback device 110 may include a display, such as a liquid crystal display (LCD), light emitting diode (LED) display, etc. for displaying playback of the video stream. The playback device 110, and/or the display of the playback device 110, may support a certain quality of video (e.g., resolution, fps, etc.) for playback, which may be, or may be compatible with, at least one resolution at which the camera(s) 108, 112, and/or 114 can capture video.

In an example, the video recorder 104 can be configured to request video streams from the one or more cameras 108, 112, and/or 114 at a certain quality or encoding (e.g., based on values for encoding parameters specified by the video recorder 104). For example, given a highest quality video supported by at least one camera 108, video recorder 104 can request the at least one camera 108 record video using the highest quality (e.g., based on a specified resolution parameter, fps parameter, etc.) and/or can request the at least one camera 108 to additionally or alternatively record video using a lower quality (e.g., based on a lower specified resolution parameter, fps parameter, etc.). The video recorder 104 can receive the one or more video streams from the at least one camera 108 for providing to the playback device 110 for playing back the video stream.

In accordance with aspects described herein, video recorder 104 can request the at least one camera 108 record video at a certain quality (e.g., based on a certain specified resolution parameter, fps parameter, etc.) based on detecting a usage pattern by the playback device 110 in requesting video from the video recorder 104, based on content in video being recorded by the at least one camera 108, etc. In another example, system 100 can include an access control device 116, which can be coupled to the video recorder 104 via network switch 106 or another interface. For example, the access control device 116 can include one or more devices in an access control system in an enterprise that can obtain credentials of a user for controlling access to one or more areas of a building (e.g., a door lock, a turnstile or other entry point, etc.) or other resources (e.g., a digital login prompt, etc.). In this example, video recorder 104 can request the at least one camera 108 record video at a certain quality (e.g., based on a certain specified resolution parameter, fps parameter, etc.) based on a detected access control event, a person identified as associated with the detected access control event, etc.

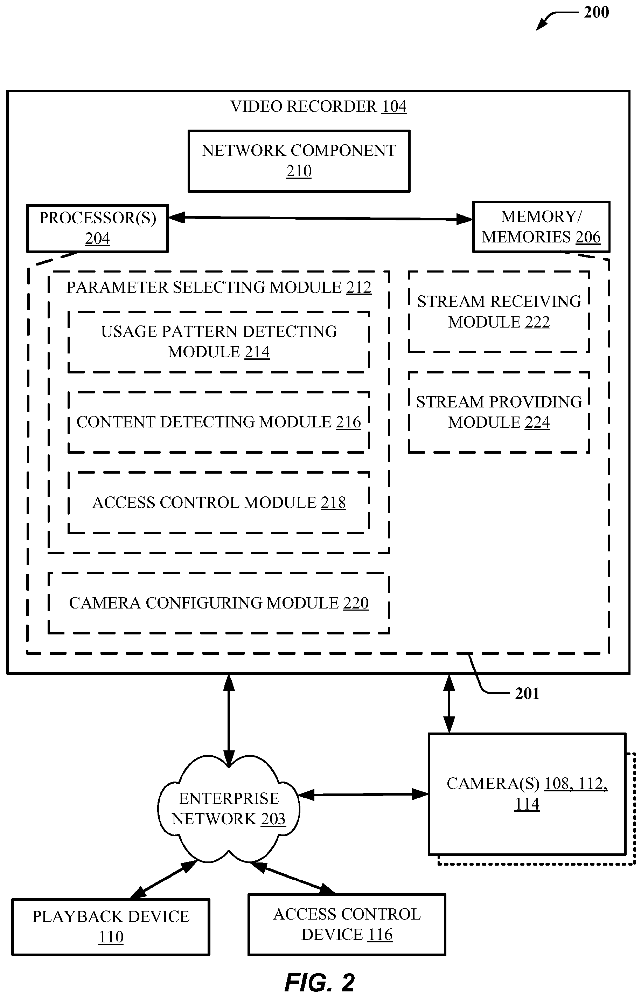

FIG. 2 is a schematic diagram of an example of a system 200 including a video recorder 104 for configuring cameras 108, 112, 114, over an enterprise network 203, or a different interface, in accordance with aspects described herein. Video recorder 104 can include or can otherwise be coupled with one or more processors 204 and/or a memory or memories 206, where the processor(s) 204 and/or memory/memories 206 can be configured to execute or store instructions or other parameters related to various components that provide certain functions. Such components may include a parameter selecting module 212 for selecting parameter values for encoding video at a camera, a camera configuring module 220 for configuring one or more cameras 108, 112, or 114 with, or based on, the parameter values, a stream receiving module 222 for receiving a video stream from the one or more cameras 108, 112, or 114 that is encoded based on the one or more parameter values, and/or a stream providing module 224 for providing, or providing access to, the video stream to a playback device 110. For example, processor(s) 204 and memory/memories 206 may be separate components communicatively coupled by a bus (e.g., on a motherboard or other portion of a computing device, on an integrated circuit, such as a system on a chip (SoC), etc.), components integrated within one another (e.g., processor(s) 204 can include the memory/memories 206 as an on-board component 201), and/or the like. Memory/memories 206 may store instructions, parameters, data structures, etc., for use/execution by processor(s) 204 to perform functions described herein.

For example, video recorder 104 can also include a network component 210 for communicating with the enterprise network 203 over a backend wired or wireless connection. Network component 210 can include a network interface card with a network port (e.g., Ethernet port) for a wired connection to the enterprise network 203, a WLAN connection for wireless connection to the enterprise network 203, and/or the like. In addition, cameras 108, 112, or 114, playback device 110, and/or access control device 116 may similarly include processor(s) 204, memory/memories 206, network component 210, etc. to facilitate transmitting or receiving information over the enterprise network 203, in accordance with aspects described herein.

In an example, parameter selecting module 212 can provide various modules executing functionality described herein to select parameter values for one or more cameras. For example, parameter selecting module 212 can include one or more of a usage pattern detecting module 214 for detecting usage patterns by a playback device and/or an associated user with respect to requesting playback of videos from the video recorder 104 (or from other video recorders or components of the enterprise network 203), which may impact the selected parameter values, a content detecting module 216 for detecting certain content in the video stream (e.g., detecting persons), which may impact the selected parameter values, and/or an access control module 218 for detecting occurrence of an access control event at an access control device 116, which may impact the selected parameter values.

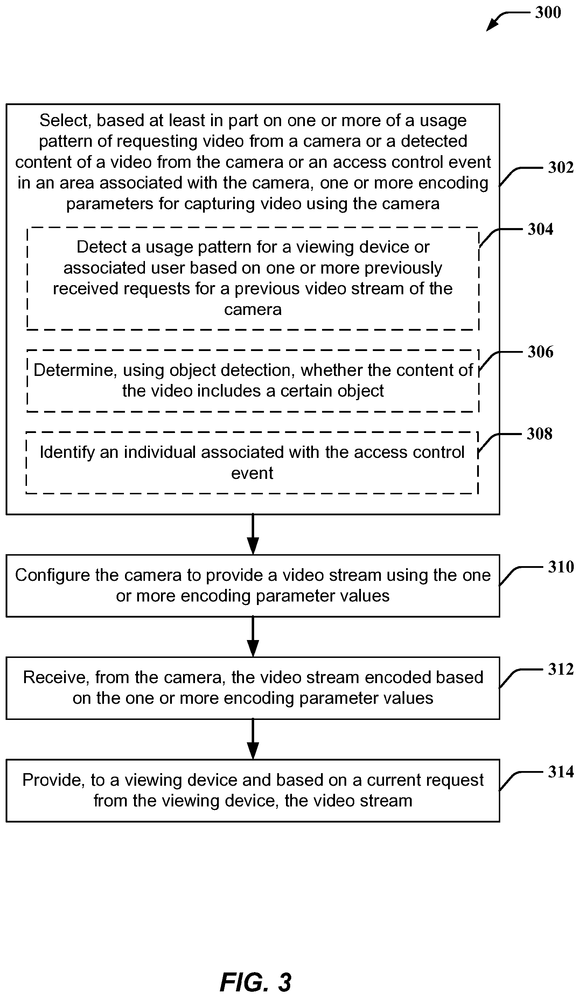

Referring to FIG. 3, an example of a method 300 for configuring cameras to provide video streams with certain encoding parameter values is depicted, in accordance with aspects described herein. The operations of the method 300 may be performed by the video recorder 104, and/or one or more modules or components thereof, as described herein.

At 302, the method 300 may include selecting, based at least in part on one or more of a usage pattern of requesting video from a camera or a detected content of a video from the camera or an access control event in an area associated with the camera, one or more encoding parameters for capturing video using the camera. In an example, parameter selecting module 212, e.g., in conjunction with the one or more processors 204, memory/memories 206, one or more components of the parameter selecting module 212, etc., can select, based at least in part on one or more of a usage pattern of requesting video from a camera or a detected content of a video from the camera or an access control event in an area associated with the camera, one or more encoding parameters for capturing video using the camera (e.g., camera 108, 112, and/or 114).

For example, parameter selecting module 212 can select the encoding parameter values for the camera to use in capturing and encoding the video stream for providing to the video recorder 104, where the encoding parameter values may include an indication of resolution (e.g., megapixels), fps, etc. Parameter selecting module 212 can select the encoding parameter values based on one or more of various possible considerations described herein, such to avoid transcoding of the received video stream by the video recorder 104 before providing to a playback device 110 for playback. Moreover, for example, the selecting of parameters may be performed based on a time-of-day (e.g., as related to a usage pattern or otherwise), a detected event (e.g., detected video content, access control event, presence of a certain individual, etc.), a system parameter, such as storage capacity, processing capability, etc. of the video recorder 104 and/or the playback device 110, and/or the like.

In one example, selecting the one or more encoding parameters, at 302, may optionally include, at 304, detecting a usage pattern for a viewing device or associated user based on one or more previously received requests for a previous video stream of the camera. In an example, usage pattern detecting module 214, e.g., in conjunction with the one or more processors 204, memory/memories 206, parameter selecting module 212, etc., can detect a usage pattern for a viewing device (e.g., playback device 110) or an associated user based on one or more previously received requests for a previous video stream of the camera. For example, video recorder 104 can receive requests from viewing devices (also referred to as playback devices) or associated users for video streams at certain encoding parameter values (e.g., at certain resolutions, fps, etc.), and the video recorder 104 can provide the video streams to the playback devices, which may otherwise require the video recorder 104 to transcode a higher quality video received from the camera to the encoding requested by the playback device. In accordance with aspects described herein, usage pattern detecting module 214 can detect the usage pattern of the viewing and/or associated user, and can request the camera record the content based on the certain encoding parameter value(s) to avoid subsequent transcoding at the video recorder 104.

In one example, over time, usage pattern detecting module 214 can predict encoding parameter values that the playback device may request in a future time period based on one or more previous requests. In one example, usage pattern detecting module 214 can detect, for a certain time period (e.g., time-of-day, day-of-week, etc.), the encoding parameter values the playback device 110 may request for a video, which may be based on previous requests for a similar time period (e.g., similar time-of-day of a threshold number of different days, similar day-of-week of a threshold number of different weeks, etc.). In this regard, for example, parameter selecting module 212 can select the encoding parameter values based on the similar historical values to have the camera record video using the requested encoding parameter values in an attempt to obtain the desired video stream from the camera without potentially having to transcode the video at the video recorder 104. In one specific example, usage pattern detecting module 214 may provide previous request data of requests received from a playback device 110, or an associated user, to a machine learning (ML) model (not shown) as training data, and can then leverage the ML model to predict requested encoding parameter values for a future time period.

In one example, selecting the one or more encoding parameters, at 302, may optionally include, at 306, determining, using object detection, whether the content of the video includes a certain object. In an example, content detecting module 216, e.g., in conjunction with the one or more processors 204, memory/memories 206, parameter selecting module 212, etc., can determine, using object detection, whether the content of the video includes a certain object, such as a person. For example, content detecting module 216 can monitor a video stream being received from the camera to determine whether and/or when the certain object is detected. In one example, parameter selecting module 212 can select lower quality encoding parameters when the certain object (e.g., a person) is not detected in the video stream, and then can select (and/or configure) higher quality encoding parameters when the certain object is detected in the video stream. In other examples, content detecting module 216 can determine an identity of persons in the video stream content, identify certain activities occurring in the video stream content (e.g., emergency situations, theft, etc.), and/or the like, and parameter selecting module 212 can select higher quality encoding parameters when certain persons, events, etc. are detected than when they are not.

In one example, selecting the one or more encoding parameters, at 302, may optionally include, at 308, identifying an individual associated with the access control event. In an example, access control module 218, e.g., in conjunction with the one or more processors 204, memory/memories 206, parameter selecting module 212, etc., can identify an individual associated with the access control event. For example, access control module 218 can receive notification of an access control event (e.g., from access control device 116), such as a door unlocking, an access attempt at a lock or turnstile by an individual, etc., and parameter selecting module 212 can select (and/or configure) higher quality encoding parameters based on detecting the access control event, and/or based on identifying a certain individual associated with the access control event, etc. (e.g., for a period of time). In an example, parameter selecting module 212 can then revert to selecting lower quality encoding parameters after a period of time following the access control event. This can enable capturing the access control event, by the camera, in higher quality resolution, but saving resources by using lower quality resolution after the access control event. In one example, the access control event can be detected in an area associated with the camera, such as an area of a building under surveillance by the camera, an access control device in an area of the building that leads to an area under surveillance by the camera, etc.

At 310, the method 300 may include configuring the camera to provide a video stream using the one or more encoding parameter values. In an example, camera configuring module 220, e.g., in conjunction with the one or more processors 204, memory/memories 206, etc., can configure the camera to provide the video stream using the one or more encoding parameter values. As described, for example, the one or more encoding parameter values can indicate a resolution (e.g., number of megapixels), fps, etc. at which to capture/encode the video and provide the video stream to the video recorder 104. In an example, camera configuring module 220 can configure the camera to provide (e.g., capture and/or encode) multiple video streams at different encoding parameter values to the video recorder 104. The multiple video streams can include a high-quality video stream and/or one or more lower quality video streams, where the configured streams can be based on usage patterns, detected video content, access control events, etc., as described.

At 312, the method 300 may optionally include receiving, from the camera, the video stream encoded based on the one or more encoding parameter values. In an example, stream receiving module 222, e.g., in conjunction with the one or more processors 204, memory/memories 206, etc., can receive, from the camera, the video stream encoded based on the one or more encoding parameter values. In this regard, for example, video recorder 104 can store the video stream, e.g., along with the one or more encoding parameter values, for providing to (or selection by) one or more playback devices as a live or recorded stream.

At 314, the method 300 may include providing, to a viewing device, and based on a current request from the viewing device, the video stream. In an example, stream providing module 224, e.g., in conjunction with the one or more processors 204, memory/memories 206, etc., can provide, to the viewing device (e.g., playback device 110) and based on a current request from the viewing device, the video stream. For example, stream providing module 224 can receive, from the playback device 110, a request for a video stream, which may specify certain encoding parameter values, and video recorder 104 may have the video stream as a stored native video stream from the camera (e.g., based on predicting, by the usage pattern, the encoding parameter values requested by the playback device 110, based on detected content in the video, based on an access control event, etc.). Thus, a transcoding can be avoided at the video recorder 104 by allowing storing and/or selection of one or more video streams encoded using selected encoding parameter values.

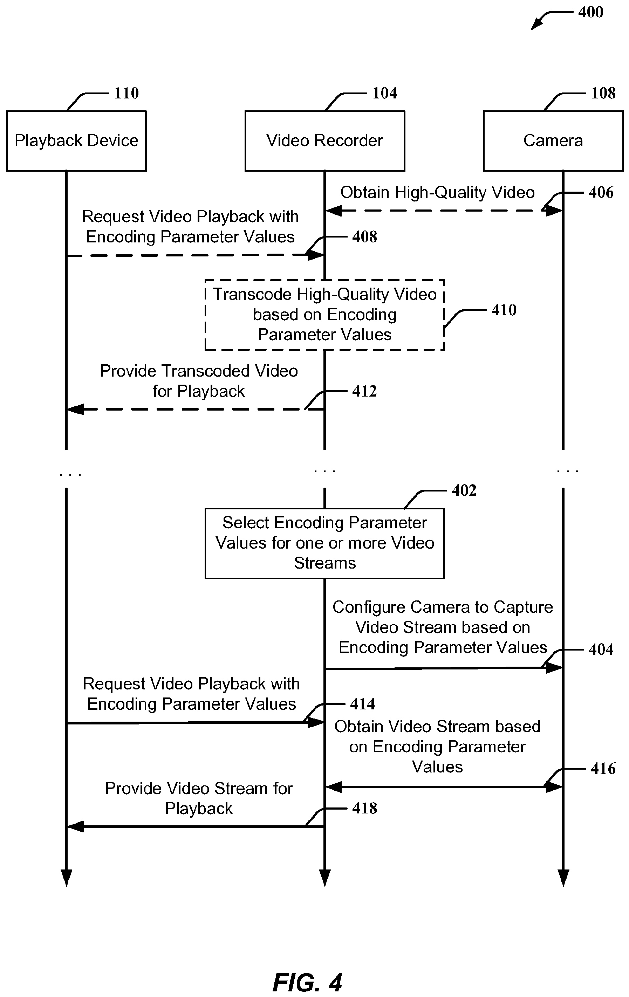

FIG. 4 is a diagram of an example of a call flow 400 between devices in a system including a video recorder, in accordance with aspects described herein. In call flow 400, at 402, a video recorder 104 can select encoding parameter values for one or more video streams, and can configure the camera 108 to capture a video stream based on the encoding parameter values at 404. As described, video recorder 104 can select the encoding parameter values based on various considerations, which may include detect a usage pattern of a playback device 110 requesting video streams from the video recorder, or may include detecting certain content in the video, or may include detecting an access control event or associated identified individuals, etc.

In one example, at 406, the video recorder 104 can optionally obtain a high-quality video stream from the camera 108, which may be the only video stream configured at the camera 108 for providing to the video recorder 104. In an example, playback device 110 may optionally request video playback with certain encoding parameter values at 408. At 410, the video recorder 104 can optionally transcode the high-quality video based on the encoding parameter values to provide a lower quality video. At 412, the video recorder 104 can optionally provide the transcoded video to the playback device 110 for playback.

Based on such requests 406, for example, video recorder 104 can predict, over time, the requests it may receive in the future for videos based on certain encoding parameter values, as described above. In this regard, for example, video recorder 104 can select, based on the usage patterns, encoding parameters to use in configuring cameras to capture video to avoid having to perform transcoding, such as the transcoding at 410. In this example, video recorder 104 can select the parameters values at 402 and configure the parameter values to the camera at 404 to obtain the video at the quality level that may be presumably requested by the playback device 110. In this regard, for example, playback device 110 can request video playback with encoding parameter values at 414, and the video recorder 104 can accordingly obtain the video stream from the camera 108 based on the encoding parameter values at 416, avoiding a transcoding operation. The video recorder 104 can provide the video stream to the playback device 110 for playback at 418. In an example, if the requested encoding parameter values do not match a video stream available at the camera 108, video recorder 104 can obtain the highest quality stream from the camera 108 and perform the transcoding.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

## Claims

1. A video recorder, comprising:
one or more processors;
one or more memories coupled with the one or more processors; and
instructions stored in the one or more memories and operable, when executed by the one or more processors, to cause the video recorder to:
select, based at least in part on one or more of a usage pattern of requesting video from a camera or a detected content of a video from the camera or an access control event in an area associated with the camera, one or more encoding parameter values for capturing the video using the camera;
configure the camera to provide a video stream using the one or more encoding parameter values;
receive, from the camera, the video stream encoded based on the one or more encoding parameter values; and
provide, to a viewing device and based on a current request from the viewing device, the video stream.

2. The video recorder of claim 1, wherein the instructions, when executed by the one or more processors, cause the video recorder to detect the usage pattern for the viewing device associated with a user based on one or more previously received requests, received from the viewing device or the user, for a previous video stream of the camera.

3. The video recorder of claim 2, wherein the instructions, when executed by the one or more processors, cause the video recorder to select the one or more encoding parameter values based at least in part on an association between the one or more previously received requests and the current request.

4. The video recorder of claim 3, wherein the association relates to a time-of-day of the one or more previously received requests and the current request, and/or
wherein the association relates to a type of the viewing device associated with the one or more previously received requests and the current request.

5. The video recorder of any of the preceding claims, wherein the instructions, when executed by the one or more processors, cause the video recorder to configure the camera to provide the video stream using the one or more encoding parameter values and at least a second video stream using other encoding parameter values, and wherein the instructions, when executed by the one or more processors, cause the video recorder to receive at least the second video stream as well, and/or
wherein the instructions, when executed by the one or more processors, cause the video recorder to detect the detected content including detecting, using object detection, one or more persons in the video.

6. The video recorder of any of the preceding claims, wherein the access control event includes an access attempt by a person at an entry point, optionally wherein the instructions, when executed by the one or more processors, cause the video recorder to select the one or more encoding parameter values further based on determining an identity of the person.

7. A computer-implemented method for preparing encoded video streams at a video recorder, comprising:
selecting, based at least in part on one or more of a usage pattern of requesting video from a camera or a detected content of a video from the camera or an access control event in an area associated with the camera, one or more encoding parameter values for capturing the video using the camera;
configuring the camera to provide a video stream using the one or more encoding parameter values;
receiving, from the camera, the video stream encoded based on the one or more encoding parameter values; and
providing, to a viewing device and based on a current request from the viewing device, the video stream.

8. The computer-implemented method of claim 7, further comprising detecting the usage pattern for the viewing device associated with a user based on one or more previously received requests, received from the viewing device or the user, for a previous video stream of the camera.

9. The computer-implemented method of claim 8, wherein selecting the one or more encoding parameter values is based at least in part on an association between the one or more previously received requests and the current request.

10. The computer-implemented method of claim 9, wherein the association relates to a time-of-day of the one or more previously received requests and the current request, and/or
wherein the association relates to a type of the viewing device associated with the one or more previously received requests and the current request.

11. The computer-implemented method of any of claims 7 to 10, wherein configuring the camera includes configuring the camera to provide the video stream using the one or more encoding parameter values and at least a second video stream using other encoding parameter values, and wherein receiving the video stream includes receiving at least the second video stream as well, and/or
further comprising detecting the detected content including detecting, using object detection, one or more persons in the video.

12. The computer-implemented method of any of claims 7 to 11, wherein the access control event includes an access attempt by a person at an entry point.

13. The computer-implemented method of claim 12, wherein selecting the one or more encoding parameter values is further based on determining an identity of the person.

14. A computer-readable medium storing instructions thereon that, when executed by at least one computing device, cause the at least one computing device
(i) to perform a method according to any of claims 7 to 13 or
(ii) to perform operations for preparing encoded video streams at a video recorder, comprising:
selecting, based at least in part on one or more of a usage pattern of requesting video from a camera or a detected content of a video from the camera or an access control event in an area associated with the camera, one or more encoding parameter values for capturing the video using the camera;
configuring the camera to provide a video stream using the one or more encoding parameter values;
receiving, from the camera, the video stream encoded based on the one or more encoding parameter values; and
providing, to a viewing device and based on a current request from the viewing device, the video stream.

15. The computer-readable medium of claim 14, the operations further comprising detecting the usage pattern for the viewing device associated with a user based on one or more previously received requests, received from the viewing device or the user, for a previous video stream of the camera.
